(19) Europäisches Patentamt
European Patent Office
Office européen des brevets

(11) Veröffentlichungsnummer: **0 019 844**
**B1**

(12) # EUROPÄISCHE PATENTSCHRIFT

(45) Veröffentlichungstag der Patentschrift: **16.03.83**

(21) Anmeldenummer: **80102821.8**

(22) Anmeldetag: **21.05.80**

(51) Int. Cl.³: **B 01 F 17/00,** C 08 G 18/28, C 08 L 97/02, C 07 C 125/065, C 07 C 149/437

(54) **Neue Emulgatoren, diese Emulgatoren enthaltende wässrige Isocyanat-Emulsionen sowie deren Verwendung als Bindemittel zur Herstellung von Formkörpern.**

(30) Priorität: **29.05.79 DE 2921681**

(43) Veröffentlichungstag der Anmeldung: **10.12.80 Patentblatt 80/25**

(45) Bekanntmachung des Hinweises auf die Patenterteilung: **16.03.83 Patentblatt 83/11**

(84) Benannte Vertragsstaaten: **AT BE CH DE FR IT LI SE**

(56) Entgegenhaltungen:
**DE-A-2 711 958**
**FR-A-1 157 828**
**FR-A-2 224 201**
**US-A-3 996 154**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Reiff, Helmut, Dr., Walter-Flex-Strasse 16, D-5090 Leverkusen (DE)**
Erfinder: **Sachs, Hanns Immo, Ing.-grad-, Semmelweisstrasse 149, D-5000 Köln 80 (DE)**

**EP 0 019 844 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Neue Emulgatoren, diese Emulgatoren enthaltende wässrige Isocyanat-Emulsionen sowie deren Verwendung als Bindemittel zur Herstellung von Formkörpern

Die Erfindung betrifft neue Emulgatoren, diese Emulgatoren enthaltende wässrige Isocyanat-Emulsionen sowie deren Verwendung als Bindemittel bei der Herstellung von Formkörpern, insbesondere Platten, z.B. aus lignocellulosehaltigen Materialien.

Presswerkstoffe wie z.B. Spanplatten, Verbundplatten oder andere Formkörper werden gewöhnlich so hergestellt, dass man das anorganische oder organische Rohmaterial, z.B. eine Masse aus Holzschnitzeln, Holzfasern oder anderem Lignocellulose enthaltenden Material mit Bindemitteln, z.B. Lösungen von wässrigen Dispersionen von Harnstoff Formaldehyd- oder Phenol/Formaldehyd-Harzen, heiss verpresst. Es ist auch bekannt, als Bindemittel für Pressplatten anstelle von Harnstoff/Formaldehyd- oder Phenol/Formaldehyd-Harzen Isocyanatlösungen zu verwenden (DE-B-1 271 984; DE-A-1 492 507; DE-A-1 653 177).

Weiterhin ist ein Verfahren zur Herstellung von Platten oder Formgegenständen bekannt geworden, welches darin besteht, dass eine Mischung aus Lignocellulosematerial und einer wässrigen Emulsion eines organischen Polyisocyanats als Bindemittel heiss verpresst wird (DE-A-2 610 522, 2 703 271, 2 724 363, 2 724 364).

Diese wässrigen Emulsionen haben aber noch den Nachteil, zu schnell mit dem Wasser unter Bildung von Kohlendioxid und Polyharnstoffen abzureagieren. Aus diesem Grund werden gemäss Stand der Technik vorzugsweise hydrophobierende Zusätze mitverwendet. Dabei handelt es sich entweder um inerte, hydrophobe Verdünnungsmittel wie beispielsweise chlorierte Paraffinwachse oder aber um hydrophobierende NCO-Prepolymere, beispielsweise aus hydriertem Rizinusöl oder oxipropyliertem Glycerin.

In FR-A-1 157 828/DE-C-1 081 225 werden Umsetzungsprodukte von Polyisocyanaten mit Alkylenoxid-Addukten an Monoalkohole mit mindestens 8 C-Atomen als Emulgatoren beschrieben, zum Beispiel Ethoxylierungsprodukte von Oleylalkohol, Laurylalkohol oder Stearylalkohol.

Derartige Umsetzungsprodukte auf der Basis langkettiger Alkohole sind als Polyisocyanat-Emulgatoren wenig geeignet (s. Vergleichsbeispiele S. 38). Dies gilt auch für aromatische Phenole mit langen Alkylketten, z.B. Nonylphenol (s. Vergleichsbeispiele S. 38).

In der FR-A-2 224 201/DE-A-2 415 435 werden Emulgatoren aus Basis der Umsetzungsprodukte von Polyisocyanaten mit ethoxylierten (mindestens 5 $-CH_2-CH_2.O$-Einheiten) aliphatischen $C_1-C_4$-Alkoholen beschrieben. Diese Emulgatoren lassen sich zur Herstellung von Polyisocyanat-Emulsionen in Wasser benutzen. Bei Verwendung derartiger Polyisocyanatemulsionen als Beleimungsmittel für Holzspäne im Verlauf der Herstellung von Spanplatten werden jedoch ungenügende Querzugfestigkeiten, insbesondere nach einer (technisch-bedingten) unterschiedlichen Lagerzeit (offene Zeit) der beleimten Späne, in den Spanplatten gemessen.

Der Erfindung liegt die Aufgabe zugrunde, die oben beschriebenen Nachteile zu überwinden, und neue wässrige Isocyanat-Emulsionen zur Verfügung zu stellen, die auch ohne Zusatzmittel ein Optimum hinsichtlich Verarbeitungszeit und geringer Reaktivität gegenüber Wasser besitzen.

Diese Aufgabe wird mittels der erfindungsgemässen Emulgatoren gelöst.

Gegenstand der vorliegenden Erfindung sind somit Emulsionen, bestehend aus

1. 80–45 Gew.-%, bezogen auf gesamte Emulsion, an Wasser,
2. 20–50 Gew.-%, bezogen auf Emulsion, eines organischen Polyisocyanats und
3. 1–10 Gew.-%, bezogen auf Polyisocyanat, eines nichtionischen, oberflächenaktiven Mittels als Emulgator,

welche dadurch gekennzeichnet sind, dass der Emulgator eine Verbindung der Formel

$$R-X-(CH_2-CH_2-O)_n-CO-NH-Y$$

ist, wobei

X für eine der zweiwertigen Gruppen $-O-$, $-\underset{R'}{N}-$, $-CH_2-O-$ oder $-S-$ steht,

n eine Zahl zwischen 10 und 50 bedeutet,

R′ einen $C_1-C_3$-Alkylrest,

R einen aromatischen oder cycloaliphatischen Rest mit insgesamt 2–9, vorzugsweise 3–6 C-Atomen, welcher gegebenenfalls Sauerstoff oder Stickstoff als Heteroatome im Ring enthält, und

Y den Rest darstellt, wie er durch Entfernung einer Isocyanatgruppe aus einem organischen Polyisocyanat, vorzugsweise dem Polyisocyanat (2), entsteht.

Gegenstand der Erfindung sind auch die in den erfindungsgemässen Emulsionen enthaltenen neuen Emulgatoren der oben angegebenen allgemeinen Formel.

Gegenstand der vorliegenden Erfindung ist weiterhin die Verwendung der erfindungsgemässen Emulsionen als Bindemittel bei der Herstellung von Formkörpern durch Heissverpressen einer Masse aus zerkleinerten organischen und/oder anorganischen Rohstoffen.

Die in den erfindungsgemässen Polyisocyanat-Emulsionen enthaltenen nichtionischen, oberflächenaktiven Mittel der allgemeinen Formel

$$R-X-(CH_2-CH_2-O)_n-CO-NH-Y,$$

in welcher

R, X, n und Y die oben angegebene Bedeutung haben, können durch Umsetzung von monofunktionellen Alkoholen der allgemeinen Formel $R-X-(CH_2-CH_2-O)_n-H$ mit Polyisocyanaten, die mindestens zwei Isocyanatgruppen enthalten, hergestellt werden, wobei mindestens eine Isocyanatgruppe je alkoholische OH-Gruppe eingesetzt wird. Die Reaktionsprodukte können dann in einem Überschuss an Polyisocyanat gelöst werden, um praxisgerechte, in Wasser emulgierbare Polyisocyanate zu erhalten.

Vorzugsweise wird jedoch bei der Umsetzung des obigen monofunktionellen Alkohols ein grosser Überschuss an Polyisocyanat angewendet, wobei die erfindungsgemässen Emulgatoren der allgemeinen Formel

$$R-X-(CH_2-CH_2-O)_n-CO-NH-Y$$

direkt in Form einer Lösung in überschüssigem Polyisocyanat entstehen.

Die monofunktionellen Alkohole der Formel $R-X-(CH_2-CH_2-O)_n-H$ werden in an sich bekannter Weise durch Ethoxylierung von Verbindungen der Formel R–X–H erhalten.

Bevorzugte Starter für die Ethoxylierungsreaktion sind beispielsweise:

N-Methylanilin,
N-Ethylanilin,
Cyclohexanol, gegebenenfalls am Ring substituiert,
Phenol, gegebenenfalls am Ring substituiert,
Thiophenol, gegebenenfalls am Ring substituiert,
Glycidalkohol,
3-Methyl-oxetan,
3-Ethyloxetan,
3-Butyl-oxetan,
Furfurylalkohol,
Tetrahydrofurfurylalkohol.

Besonders bevorzugte Strukturen R–X– in den monofunktionellen Polyethylenoxidderivaten der allgemeinen Formel $R-X-CH_2-CH_2-O)_n-H$ sind:

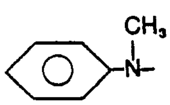

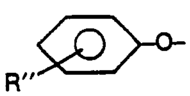

$R'' = CH_3-$, Halogen–, $O_2N-$.

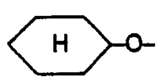

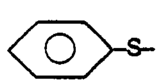

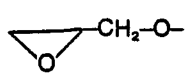

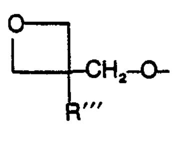

$R''' = CH_3$ oder $-C_2H_5$

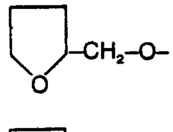

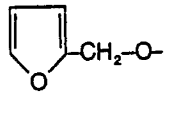

<u>n</u> in der allgemeinen Formel $R-X-(CH_2-CH_2-O)_n-H$ wird vorzugsweise so gewählt, dass ein Molekulargewicht von 500–2500 entsteht; ganz besonders bevorzugt ist ein Molgewichtsbereich von 700–2000. <u>n</u> stellt somit im Mittel eine Zahl zwischen 10 und 50 dar, besonders bevorzugt ist n = 15–40.

Die Alkohole der allgemeinen Formel $R-X-(CH_2-CH_2-O)_n-H$ werden wie oben beschrieben mit Polyisocyanaten, vorzugsweise im Überschuss, zu den erfindungsgemässen oberflächenaktiven Mitteln $R-X-(CH_2-CH_2-O)_n-CO-NH-Y$ umgesetzt, wobei R, X, n und Y die oben angegebene Bedeutung haben. Dabei entstehen, wenn das Polyisocyanat im Überschuss eingesetzt wurde, vorzugsweise Lösungen der erfindungsgemässen oberflächenaktiven Mittel in Polyisocyanaten. Diese Lösungen sind im allgemeinen klar und lagerstabil, können jedoch naturgemäss gefärbt sein. Dies ist immer dann der Fall, wenn grosstechnische Rohprodukte als Polyisocyanate eingesetzt werden.

Die Umsetzung kann z.B. durch Zusetzen des monofunktionellen Alkohols der allgemeinen Formel $R-X-(CH_2CH_2-O)_n-H$ zu dem Polyisocyanat unter Rühren erfolgen. Dabei ist es zweckmässig, die in vielen Fällen wachsartigen Alkohole vorher aufzuschmelzen. Die Reaktion läuft bei Verwendung der bevorzugten Polyphenyl-polymethylen-polyisocyanate schon bei Raumtemperatur ab. Sie kann jedoch selbstverständlich durch Erwärmen, z.B. auf Temperaturen von 50–100 °C, beschleunigt werden. In der Praxis haben sich Reaktionstemperaturen zwischen 50 und 80 °C und Reaktionszeiten von 1–5 Stunden als bevorzugt erwiesen.

Zur Herstellung der erfindungsgemässen Emulsionen werden die Lösungen der erfindungsgemässen Emulgatoren, d.h. der oberflächenaktiven, nichtionischen Verbindungen der allgemeinen Formel $R-X-(CH_2-CH_2-O)_n-CO-NH-Y$ im Polyisocyanat mit der gewünschten Menge an Wasser vermischt. Die wässrigen Emulsionen entstehen meist leicht und erfordern im allgemeinen keine besonderen Scherkräfte zu ihrer Bildung. So kann man beispielsweise schon in einem Eimer, unter Verwendung einer Holzlatte als Rührer, von Hand die erfindungsgemässen Emulsionen erzeugen, indem man entweder die Lösung des erfindungsgemässen Emulgators in einem Polyisocyanat in Wasser einrührt oder aber umgekehrt das Wasser in das vorgelegte, mittels des erfindungsgemässen Emulgators wasserdispergierbar gemachte Polyisocyanat einrührt.

Selbstverständlich können in technischen Anlagen die Emulsionen auch durch Vermischen der Ausgangskomponenten in speziellen Mischaggregaten erzeugt werden, beispielsweise in statischen Mischern, Rührwerkmischköpfen, Dispergiermaschinen, ®Supraton-Aggregaten usw.

Als Isocyanatkomponente kommen bei der Herstellung der erfindungsgemässen Emulgatoren aliphatische, cycloaliphatische, araliphatische, aromatische und heterocyclische Polyisocyanate in Betracht, wie sie z.B. von W. Siefken in Justus

Liebigs Annalen der Chemie, 562, Seiten 75 bis 136, beschrieben werden, beispielsweise solche der Formel

$$Q\ (NCO)_n$$

in der n = 2–4, vorzugsweise 2, und

Q einen aliphatischen Kohlenwasserstoffrest mit 2–18, vorzugsweise 6–10 C-Atomen,

einen cycloaliphatischen Kohlenwasserstoffrest mit 4–15, vorzugsweise 5–10 C-Atomen,

einen aromatischen Kohlenwasserstoffrest mit 6–15, vorzugsweise 6–13 C-Atomen,

oder einen araliphatischen Kohlenwasserstoffrest mit 8–15, vorzugsweise 8–13 C-Atomen,

bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl,cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäss in Frage: Triphenylmethan-4,4',4''-triisocyanat, Polyphenyl-polymethylen-polyisocyanate, wie sie durch Anilin-Formaldehyd-Kondensation und anschliessende Phosgenierung erhalten und z.B. in den GB-A-874 430 und 848 671 beschrieben werden, m- und p-Isocyanatophenylsulfonyl-isocyanate gemäss US-A-3 454 606, perchlorierte Arylpolyisocyanate, wie sie z.B. in DE-B-1 157 601 (US-A-3 277 138) beschrieben werden, Carbodiimidgruppen aufweisende Polyisocyanate, wie sie in DE-C-1 092 007 (US-A-3 152 162) sowie in DE-A-2 504 400, 2 537 685 und 2 552 350 beschrieben werden, Norboran-Diisocyanate gemäss US-A-3 492 330, Allophanatgruppen aufweisende Polyisocyanate, wie sie z'B. in GB-A-994 890, BE-A-761 626 und NL-A-7 102 524 beschrieben werden, Isocyanuratgruppen aufweisende Polyisocyanate, wie sie z.B. in US-A-3 001 973, in DE-C-1 022 789, 1 222 067 und 1 027 394 sowie in DE-A-1 929 034 und 2 004 048 beschrieben werden, Urethangruppen aufweisende Polyisocyanate, wie sie z.B. in BE-A-752 261 oder in US-A-3 394 164 und 3 644 457 beschrieben werden, acylierte Harnstoffgruppen aufweisende Polyisocyanate gemäss DE-C-1 230 778, Biuretgruppen aufweisende Polyisocyanate, wie sie z.B. in US-A-3 124 605, 3 201 372 und 3 124 605 sowie in der GB-A-889 050 beschrieben werden, durch Telomerisationsreaktionen hergestellte Polyisocyanate, wie sie z.B. in US-A-schrift 3 654 106 beschrieben werden, Estergruppen aufweisende Polyisocyanate, wie sie z.B. in GB-A-965 474 und 1 072 956, in US-A-3 567 763 und in DE-C-1 231 688 genannt werden, Umsetzungsprodukte der obengenannten Isocyanate mit Acetalen gemäss DE-C-1 072 385 und polymere Fettsäureester enthaltende Polyisocyanate gemäss US-A-3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren, Polyphenylpolymethylen-polyisocyanate, wie sie durch Anilin-Formaldehyd-Kondensation und anschliessende Phosgenierung hergestellt werden und Carbodiimidgruppen, Urethangruppen, Allophanatgruppen, Isocyanuratgruppen, Harnstoffgruppen oder Biuretgruppen aufweisenden Polyisocyanate («modifizierte Polyisocyahate»), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Für die Herstellung der erfindungsgemässen Emulgatoren können auch endständige Isocyanatgruppen aufweisende Präpolymere mit einem mittleren Molekulargewicht von ca. 300 bis 2000 eingesetzt werden, wie sie durch Umsetzung von höhermulekularen und/oder niedermolekularen Polyolen mit einem Überschuss an Polyisocyanat in an sich bekannter Weise erhalten werden. In diesem Zusammenhang geeignete höhermolekulare Polyole sind insbesondere zwei bis acht Hydroxylgruppen aufweisende Verbindungen, speziell solche vom Molekulargewicht 400 bis 10 000, vorzugsweise 800 bis 5000, z.B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie beispielsweise für die Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäure, gegebenenfalls in Mischung nicht monomeren ungesättigten Fettsäuren, wie Ölsäure; Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Auch die erfindungsgemäss in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in DE-B-1 176 358 und 1 064 938 beschrieben werden, sowie auf Formit oder Formose gestartete Polyäther (DE-A-2 639 083 bzw. 2 737 951), kommen erfindungsgemäss in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäss geeignet.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-A-1 694 128) lassen sich erfindungsgemäss geeignete Polyacetate herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-B-1 694 080, 1 915 908 und 2 221 751; DE-A-2 605 024).

Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäss einsetzbar.

Geeignete niedermolekulare Polyole (Molekulargewicht 62 bis 400) sind z.B. die oben als Ausgangskomponenten für die Herstellung der höhermolekularen Polyole genannten Verbindungen.

Als Isocyanatkomponente der erfindungsgemässen Emulsionen eignen sich alle oben im Zusammenhang mit der Emulgatorenherstellung genannten Polyisocyanate, sofern sie bei den Verarbeitungstemperaturen, insbesondere bei Raumtemperatur, flüssig sind. Vorzugsweise sind die Isocyanatkomponenten identisch, da, wie oben erwähnt, der Emulgator direkt in situ im Polyisocyanat durch Eintragen des Ethylenoxidsequenzen tragenden Monoalkohols hergestellt wird.

Die erfindungsgemässen Emulsionen werden, wie schon erwähnt, vorzugsweise als Bindemittel für lignocellulosehaltige Werkstoffe eingesetzt. In diesem Zusammenhang haben sich vor allem Emulsionen bewährt, deren Isocyanatkomponente (siehe DE-A-2 711 958) das Phosgenierungsprodukt der nicht destillierten Bodenfraktion ist, wie sie bei der Entfernung von 25 bis 90 Gew.-%, vorzugsweise 30 bis 85 Gew.-% an 2,2'-, 2,4'- und/oder 4,4'-Diaminodiphenylmethan aus einem Anilin/Formaldehyd-Kondensat entsteht, oder aber jene nicht destillierte Bodenfraktion ist, wie sie bei der Entfernung von 25 bis 90 Gew.-%, vorzugsweise 30 bis 85 Gew.-% an 2,2'-, 2,4'und/oder 4,4'-Diisocyanatodiphenylmethan aus dem rohen Phosgenierungsprodukt eines Anilin/Formaldehyd-Kondensates erhalten wurde, wobei die Isocyanatkomponente 35 bis 70 Gew.-%, vorzugsweise 45 bis 60 Gew.-%, an Diisocyanatodiphenylmethan enthält, wobei der Gehalt an 2,4'-Diisocyanatodiphenylmethan zwischen 1 und 8 Gew.-%, vorzugsweise zwischen 2 und 5 Gew.-%, und der

Gehalt an 2,2'-Diisocyanatodiphenylmethan zwischen 0 und 2 Gew.-% beträgt, und wobei die Isocyanatkomponente eine Viskosität bei 25 °C von 50 bis 600 mPas, vorzugsweise 200 bis 500 mPas, und einen NCO-Gehalt zwischen 28 und 32 Gew.-% aufweist.

Wie aus dem oben Gesagten hervorgeht, den derartige Bodenfraktionen beispielsweise bei der Entfernung von 45 bis 90 Gew.-%, vorzugsweise 55 bis 85 Gew.-%, an 4,4'-Diisocyanato-diphenylmethan aus einem rohen Diphenylmethandiisocyanat erhalten, welches mehr als 85 Gew.-%, vorzugsweise mehr als 90 Gew.-%, an 4,4'-Diisocyanatodiphenylmethan enthält. Ein solches rohes Diphenylmethandiisocyanat ist beispielsweise nach dem Verfahren der DE-A-2 356 828 zugänglich.

Eine andere Möglichkeit besteht darin, aus einem rohen Phosgenierungsprodukt mit einem Gehalt an Diisocyanatodiphenylmethanisomeren von 60 bis 90 Gew.-%, vorzugsweise 65 bis 75 Gew.-%, welches 20 bis 60, vorzugsweise 30 bis 40 Gew.-%, an 2,4'-Isomeren enthält, 25 bis 80 Gew.-%, vorzugsweise 30 bis 60 Gew.-%, an 2,4'-Diisocyanatodiphenylmethan und gegebenenfalls 4,4'- bzw. 2,2'-Diisocyanatodiphenylmethan und gegebenenfalls 4,4'- bzw. 2,2'-Diisocyanatodiphenylmethan abzudestillieren. In jedem Falle kann dabei die Destillation so geführt werden, dass der Rückstand die oben angegebene Zusammensetzung aufweist.

Selbstverständlich ist es jedoch auch möglich (und in vielen Fällen in der Praxis auch einfacher), die gewünschte Isomeren- und Oligomerenzusammensetzung des Polyisocyanatgemisches durch Verschneiden verschiedener Bodenfraktionen zu erhalten.

Geeignete lignocellulosehaltige Rohstoffe, welche mit den erfindungsgemässen Emulsionen gebunden werden können, sind beispielsweise Holz, Rinde, Kork, Bagasse, Stroh, Flachs, Bambus, Alfagras, Reisschalen, Sisal- und Kokosfasern. Das Material kann dabei in Form von Granulaten, Spänen, Fasern oder Mehl vorliegen und einen Wassergehalt von z.B. 0 bis 35 Gew.-%, vorzugsweise von 5 bis 25 Gew.-%, aufweisen. Es wird mit dem erfindungsgemäss zu verwendenden Bindemittel in einer Menge von 1 bis 100, vorzugsweise 2 bis 12 Gew.-%, versetzt und – im allgemeinen unter Einwirkung von Druck und Hitze – zu Platten oder Formkörpern verpresst.

Selbstverständlich können erfindungsgemäss jedoch auch aus anderen organischen (z.B. Kunststoffabfälle aller Art) und/oder anorganischen Rohstoffen (z.B. Blähglimmer oder Silikatkugeln) Presskörper hergestellt werden.

Bei der Durchführung des erfindungsgemässen Verfahrens wird das zu verpressende Material mit dem Bindemittel vermischt, und zwar zweckmässig durch Besprühen mit der wässrigen Emulsion, um so eine möglichst homogene Verteilung zu erreichen. Es wurde gefunden, dass die erfindungsgemässen wässrigen Emulsionen eine ausreichend geringe Viskosität besitzen, dass sie mit einem Gehalt bis zu 50% Isocyanat versprüht werden können, während die Lösungen von Harnstoff/Formaldehyd- und Phenol/Formaldehyd-Harzen, die gewöhnlich bei der Herstellung von Pressplatten und ähnlichen Materialien verwendet werden, im allgemeinen nur bei Feststoffgehalten von unter 40% versprühbar sind. Die Erfindung liefert somit ein Arbeitsverfahren, bei dem weniger Wasser zugegen ist als bisher, so dass weniger Wasser während der Heissverpressungsstufe bzw. der nachfolgenden Konditionierung entfernt zu werden braucht. Darüber hinaus braucht das Lignocellulosematerial nicht getrocknet zu werden, bevor es mit dem Bindemittel vermischt wird.

Es wurde weiterhin gefunden, dass die Verpressung beim erfindungsgemässen Verfahren bei Temperaturen unter 100 °C (z.B. bei 90 bis 95 °C) wirksam durchgeführt werden kann, statt bei 150 bis 220 °C, wie es bei der Verwendung von Harnstoff/Formaldehyd- und Phenol/Formaldehyd-Harzen üblich ist. Die Anwendung derartig niedriger Temperatur spart Energie und ist umweltfreundlich, da die Bildung von Rauch und Dämpfen verhindert wird.

Ein weiterer Vorteil ist, dass die Bildung von Dampfblasen vermieden wird, welche innerhalb von Platten und geformten Gegenständen bei hohen Temperaturen entstehen können, was von besonderer Bedeutung bei der Herstellung von Laminaten mit undurchlässigen Flächen ist. Während des Verpressens kann daher eine bessere Verdichtung erhalten werden, weil es nicht mehr notwendig ist, für eine genügende Durchlässigkeit zum Entweichen des Dampfes zu sorgen.

Erfindungsgemäss kann natürlich auch bei den üblichen höheren Temperaturen gearbeitet werden. Dies kann unter gewissen Umständen auch wünschenswert sein, da hierdurch die Aushärtungszeiten verkürzt werden und die hergestellten Formkörper sich leichter von den Presswerkzeugen entfernen lassen.

In der Praxis können Verzögerungsperioden zwischen den einzelnen Verfahrensstufen (Herstellung der Emulsion; Besprühen des zu verwendenden Materials) auftreten, sowie auch Verzögerungen infolge von Arbeitsfehlern oder infolge einer Neueinstellung der Verfahrensbedingungen. In wünschenswerter Weise verläuft jedoch die Umsetzung zwischen dem Isocyanat und dem Wasser in den erfindungsgemässen Emulsionen genügend langsam, so dass eine Verzögerung von mindestens 2 Stunden zwischen Herstellung der Emulsion und dem Heisspressen in Kauf genommen werden kann. Die Reaktionsgeschwindigkeit kann noch verlangsamt werden, indem eine möglichst geringe Menge an oberflächenaktiven Mitteln verwendet wird. Ein weiterer Weg, die Reaktionsgeschwindigkeit zu verlangsamen, ist über die Reaktivität der Polyisocyanate gegenüber Wasser gegeben. So kann man beispielsweise durch einen erhöhten Anteil an 2,4'- und/oder 2,2'-Diphenylmethyndiisocyanat die Reaktionsgeschwindigkeit deutlich herabsetzen.

In analoger Weise können auch mehrlagige Platten oder Formteile aus Furnieren, Papieren oder Geweben hergestellt werden. Auch mehrschichtige Platten oder Formteile aus Furnieren und Streifen-, Stab- oder Stäbchenmittellagen, sogenannte Tischlerplatten, können erfindungsgemäss hergestellt werden, indem man die Furniere wie oben beschrieben mit der Polyisocyanatemulsion behandelt und anschliessend mit den Mittellagen – in der Regel bei erhöhter Temperatur und erhöhtem Druck – verpresst. Vorzugsweise werden dabei Temperaturen von 100–250 °C, besonders bevorzugt 130–220 °C, eingehalten. Der Anfangspressdruck liegt auch hier vorzugsweise zwischen 5 und 150 bar; im Laufe des Pressvorganges fällt dann der Druck meist bis gegen 0 ab.

Erfindungsgemäss können die Polyisocyanatemulsionen auch in Kombination mit den oben beschriebenen Polyhydroxylverbindungen in einem NCO/OH-Verhältnis zwischen 1:2 und 10:1, vorzugsweise 1,5:1 bis 1:1, eingesetzt werden. Es ist dabei möglich, die beiden Komponenten getrennt oder als reaktives Gemisch einzusetzen. Praktische Bedeutung haben derartige Kombinationen von Polyisocyanat und Polyhydroxylverbindungen als Bindemittel z.B. bei der Bindung von Korkschrot. Es ist auch möglich, an sich bekannte Treibmittel in einer Menge von ca. 0,5 bis 30 Gew.-%, bezogen auf Binde- oder Imprägniermittel, und/oder andere die Schaumbildung oder die chemische Reaktion zwischen Polyisocyanaten, lignocellulosehaltigem Material und gegebenenfalls Polyhydroxylverbindungen beeinflussende Additive wie Stabilisatoren, Katalysatoren und Aktivatoren in einer Menge von 0,05 bis 10 Gew.-%, bezogen auf Binde- bzw. Imprägniermittel, zuzusetzen.

Die erfindungsgemäss als Bindemittel zu verwendenden Polyisocyanatemulsionen können auch mit den in der Holzwerkstoffindustrie bisher überwiegend eingesetzten wässrigen Lösungen von Kondensationsprodukten aus Formaldehyd mit Harnstoff und/oder Melamin und/oder Phenol kombiniert werden, aber auch mit anderen, bisher weniger üblichen Binde- und Imprägniermitteln, wie z.B. Sulfitablauge oder Tannin, wobei z.B. ein Mischungsverhältnis der erfindungsgemässen mit diesen zusätzlichen Bindemitteln zwischen 1:10 und 10:1, vorzugsweise zwischen 1:5 und 5:1, eingehalten werden kann und wobei man die Polyisocyanatemulsion und die zusätzlichen Bindemittel entweder separat oder auch in Mischung einsetzen kann.

Besonders vorteilhaft sind derartige Kombinationen bei der Herstellung von mehrschichtigen Platten mit speziellen Eigenschaften. Man kann z.B. die äusseren Schichten mit konventionellen Klebstoffen (allein oder gemeinsam mit der Polyisocyanatemulsion) und eine oder mehrere innere Schichten mit den erfindungsgemäss zu verwendenden Polyisocyanatemulsionen (allein oder gemeinsam mit konventionellen Klebstoffen) versetzen und anschliessend miteinander verpressen.

Infolge ihrer hervorragenden mechanischen Eigenschaften eignen sich die erfindungsgemäss hergestellten Platten oder Formteile auf Basis von lignocellulosehaltigen oder anderen organischen und/oder anorganischen Rohstoffen vor allem für eine Verwendung im Bauwesen. Um den Platten oder Formteilen die hierfür im allgemeinen erforderliche Beständigkeit gegen Pilzbefall, Insektenfrass oder Feuereinwirkung zu verleihen, kann man den Bindemitteln die handelsüblichen organischen oder anorganischen Schutzmittel, in reiner Form oder als Lösung in einer Menge von ca. 0,05 bis 30 Gew.-%, vorzugsweise 0,5 bis 20 Gew.-%, bezogen auf gesamtes Material, zusetzen. Als Lösungsmittel kommen in Frage: Wasser oder organische Lösungsmittel, z.B. Rückstandsöle aus der Erdölaufarbeitung, Chlorkohlenwasserstoffe u.a. Die Verleimungsqualität wird hierdurch im allgemeinen nicht beeinträchtigt. Im Gegensatz zu Phenol/Formaldehyd-Harz-verleimten Platten treten bei den erfindungsgemäss hergestellten Werkstoffen dabei vorteilhafterweise weder Salzausblühungen noch «Ausbluten» ein.

Bedingt durch die hohe Klebkraft der erfindungsgemässen Bindemittel neigen die hiermit imprägnierten bzw. gebundenen Formkörper häufig dazu, an den Oberflächen der heissen Pressen oder Formen zu haften. Dies kann durch Trennmittel, welche man den Isocyanatemulsionen zusetzt, vermieden werden. Eine andere Lösung besteht darin, die Trennmittel in reiner Form oder als Lösung auf die mit den Presslingen in Berührung kommenden metallischen Oberflächen oder die Formlingsoberfläche aufzubringen. Als Trennmittel kommen hierbei alle bisher zu diesem Zweck vorgeschlagenen Substanzen in Frage. Bevorzugt sind jedoch gemäss DE-A-2 325 926 Verbindungen, welche bei Isocyanaten eine Isocyanuratbildung katalysieren, beispielsweise Phenol-Mannichbasen, Derivate des Hexahydrotriazins oder Alkalisalze von Carbonsäuren. Wie schon mehrfach erwähnt, können mit den erfindungsgemäss zu verwendenden Isocyanatemulsionen im Vergleich zu herkömmlichen Bindemitteln auf Basis von Phenol/Formaldehyd- oder Harnstoff/Formaldehyd-Harzen bei der Spanplattenherstellung wesentliche Verbesserungen, sowohl im Hinblick auf die mechanischen Eigenschaften als auch in verfahrenstechnischer Hinsicht, erzielt werden. So ist es im Falle von Holzspanplatten möglich, entweder bei gleicher Bindemittelmenge wie bei Phenol/Formaldehyd- bzw. Harnstoff/Formaldehyd-Harzen eine um bis zu 50% erhöhte Biegesteifigkeit (neben einer Verbesserung anderer mechanischer Eigenschaften) oder aber bei einer um etwa 25 bis 70% erniedrigten Bindemittelkonzentration ein gleiches mechanisches Eigenschaftsbild zu erreichen. Diese optimalen Werkstoffeigenschaften werden insbesondere dann erzielt, wenn als Bindemittel ein Polymethylen-Polyphenyl-Polyisocyanat mit der oben näher definierten Viskosität und Isomerenverteilung eingesetzt wird.

Es ist hierbei ohne Einfluss, ob das Polyisocyanatgemisch durch Abdestillieren von 2,4'- und/oder 4,4'-Diisocyanatodiphenylmethan aus rohem Diphenylmethandiisocyanat oder analog durch Abtrennen von reinem Diaminodiphenylmethan aus rohem Diaminodiphenylmethan und anschliessende Phosgenierung der so erhaltenen nicht destillierten Bodenfraktion aus Polyarylaminen hergestellt wurde.

Enthält das Polyisocyanat mehr als 75 Gew.-% an Diisocyanatodiphenylmethanen, so wird das physikalische Werteniveau der Spanplatte in der Regel verschlechtert. Sinkt andererseits der Gehalt an Diisocyanatodiphenylmethanen auf unter 35 Gew.-%, so wird im allgemeinen das Bindemittel bei Raumtemperatur zu hochviskos und lässt sich schlecht emulgieren.

Die folgenden Beispiele erläutern die Erfindung. Wenn nicht anders vermerkt, sind Zahlenangaben als Gewichtsteile bzw. Gewichtsprozente zu verstehen.

Ausgangspolyisocyanate

I: Vom rohen Phosgenierungsprodukt eines Anilin/Formaldehyd-Kondensats wird soviel Diisocyanatodiphenylmethan abdestilliert, dass der Destillationsrückstand bei 25 °C eine Viskosität von 100 mPas aufweist. (2-Kernanteil: 59,7%; 3-Kernanteil: 21,3%; Anteil an höherkernigen Polyisocyanaten: 19,0%).

II: Entsprechend hergestelltes Polyisocyanat mit einer Viskosität bei 25 °C von 200 mPas (2-Kernanteil: 44,3%; 3-Kernanteil: 23,5%; Anteil an höherkernigen Polyisocyanaten: 32,2%).

III: Entsprechend hergestelltes Polyisocyanat mit einer Viskosität bei 25 °C von 400 mPas (2-Kernanteil: 45,1%; 3-Kernanteil: 22,3%; Anteil an höherkernigen Polyisocyanaten: 32,6%).

IV: Analog hergestelltes Polyisocyanat mit einer Viskosität von 300 mPas/25 °C 2-Kernanteil: 60%; NCO-Gehalt: 30%.

V: Produkt analog IV mit einem 2-Kernanteil von 60%; NCO-Gehalt: 30,5%; Viskosität: 230 mPas/25 °C.

VI: Produkt analog V, aber mit einem 2-Kernanteil von 70%; NCO-Gehalt: 30,0%; Viskosität: 190 mPas/25 °C.

Tabelle 1
Ausgangsverbindungen des Typs $R–X–(CH_2–CH_2–O)_n–H$

| Verbindung | | OH-Zahl | Molekulargewicht |
|---|---|---|---|
| A | Ethoxyliertes N-Methylanilin | 56 | 1000 |
| B | Ethoxyliertes N-Methylanilin | 87 | 645 |
| C | Ethoxyliertes Cyclohexanol | 57 | 990 |
| D | Ethoxyliertes 3-Ethyl-3-hydroxymethyloxetan | 75 | 750 |
| E | Ethoxyliertes 3-Ethyl-3-hydroxymethyloxetan | 47 | 1192 |
| F | Ethoxyliertes 3-Methl-3-hydroxymethyloxetan | 56 | 1000 |
| G | Ethoxyliertes Phenol | 67 | 835 |
| H | Ethoxyliertes Phenol | 48 | 1165 |
| I | Ethoxlylierter Furfurylalkohol | 26 | 2150 |
| K | Ethoxyliertes Thiophenol | 42 | 1500 |
| L | Ethoxylierter Tetrahydrofurfurylalkohol | 48 | 1165 |
| X | Vergleichsverbindung Ethoxyliertes Alfol* | 49 | 1140 |
| Y | Vergleichsverbindung Ethoxylierter Oleylalkohol** | 79 | 708 |
| Z | Vergleichsverbindung Ethoxyliertes Nonylphenol*** | 50 | 1111 |

* ‹Alfol› ist ein technisches Gemisch von gesättigten $C_{12}$–$C_{18}$-Monoalkoholen.
** identisch mit ®Emulgator 0–10 der Bayer AG.
***identisch mit ®Emulgator NP–20 der Bayer AG.

Beispiel 1

In einem 3-Liter-Rührbecher mit Rückflusskühler werden unter Stickstoff zu 1870 g des Ausgangspolyisocyanates I bei 40 °C in einem Guss 130 g der Verbindung A (durch Aufschmelzen bei 55 °C verflüssigt) zugefügt. Nach 15 Minuten steigert man die Temperatur des Reaktionsgemisches auf 65 °C und hält 3 Stunden bei dieser Temperatur. Nach Abkühlen auf Raumtemperatur erhält man eine klare, braune Lösung des erfindungsgemässen nichtionischen oberflächenaktiven Mittels der idealisierten Formel

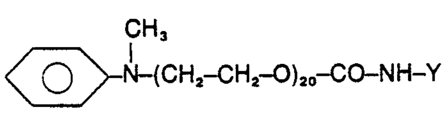

in überschüssigem Polyisocyanat I.

Der Gehalt an ethoxyliertem N-Methylanilin beträgt 7%, die Viskosität 155 mPas und der NCO-Gehalt 28,24%.

Aus dem Reaktionsprodukt wurden nach folgenden Arbeitsweisen weisse, dünnflüssige, erfindungsgemässe wässrige Polyisocyanat-Emulsionen erhalten:

a) Zu 60 g des emulgatorhaltigen Polyisocyanats fügt man in einem Becherglas unter Rühren mit einem Glasstab 140 ml Wasser zu. Nach ca. 2 Minuten ist das gesamte Material in eine weisse, dünnflüssige Emulsion vom Typ O/W überführt. Der Feststoffgehalt beträgt 30%.

b) Man verfährt umgekehrt, d. h. man legt 140 ml Wasser vor und fügt 60 g des emulgatorhaltigen Polyisocyanats unter Rühren mit einem Glasstab zu. Auch in diesem Fall erhält man eine weisse dünnflüssige Emulsion vom Typ O/W.

c) In einem 1-Liter-Pappbecher legt man 120 g des emulgatorhaltigen Polyisocyanats vor und fügt unter Rühren mit einem Pendraulikrührer (ca. 800 Upm) 180 ml Wasser im Verlauf von 10 Sek. zu. Man erhält schon nach 30 Sek. eine feinteilige Emulsion, die weisslich und dünnflüssig ist. Der Feststoffgehalt beträgt 40%. Die Emulsion ist etwas feinteiliger als a und b.

Beispiele 2–20

Völlig analog zu Beispiel 1 wurden aus den Ausgangsverbindungen A bis L und den Polyisocyanaten I bis VI die Materialien der Ausführungsbeispiele 2–20 erhalten. Die folgende Tabelle 2 gibt die Mengenverhältnisse der Ausgangskomponenten, die Reaktionsbedingungen (Temperatur, Zeit) und die Eigenschaften der Endprodukte (Gew.-% NCO, Viskosität) an.

Aus allen Produkten erhielt man weisse feinteilige dünnflüssige Emulsionen. Dazu wurden jeweils 60 g der Materialien aus Beispiel 2–20 mit jeweils 140 g Wasser mit einem Pendraulikrührer bei ca. 1000 Upm im Verlauf von 30 Sek. vermischt. Alle Emulsionen der Beispiele 2–20 hatten einen Feststoffgehalt von 30%.

Tabelle 2

| Beispiel | $R-X-(CH_2-CH_2-O)_n-H$ Typ | Menge (bez. auf Polyisocyanat) | Polyisocyanat | % NCO | Viskosität/23°C (mPas) | Temp. (°c) | Zeit (h) |
|---|---|---|---|---|---|---|---|
| 2 | F | 5% | II | 29,1 | 180 | 80 | 1 |
| 3 | A | 5% | II | 27,8 | 400 | 50 | 3 |
| 4 | A | 10% | II | 26,2 | 450 | 50 | 3 |
| 5 | B | 10% | II | 26,1 | 500 | 60 | 2 |
| 6 | H | 5% | II | 27,9 | 500 | 60 | 2 |
| 7 | H | 10% | II | 26,2 | 550 | 60 | 2 |
| 8 | G | 5% | II | 27,8 | 400 | 50 | 2 |
| 9 | L | 5% | II | 29,4 | 110 | 40 | 5 |
| 10 | D | 5% | II | 29,0 | 120 | 50 | 3 |
| 11 | E | 5% | IV | 28,0 | 330 | 50 | 4 |
| 12 | E | 5% | II | 28,8 | 250 | 60 | 3 |
| 13 | E | 5% | V | 27,9 | 150 | 50 | 3 |
| 14 | E | 5% | VI | 27,6 | 100 | 50 | 3 |
| 15 | C | 5% | II | 27,6 | 150 | 60 | 3 |
| 16 | J | 5% | I | 28,6 | 140 | 60 | 3 |
| 17 | K | 7% | I | 28,1 | 175 | 60 | 3 |
| 18 | J | 6% | III | 28,0 | 440 | 55 | 4 |
| 19 | E | 10% | IV | 25,9 | 500 | 50 | 3 |
| 20 | D | 10% | IV | 26,5 | 450 | 50 | 3 |

Beispiel 21

Zu 380 g (2,184 Mol) Toluylendiisocyanat (2,4/2,6-Isomerenverhältnis 80:20) gibt man in einem Guss 20 g der Verbindung E. Anschliessend erwärmt man unter Rühren 2 Stunden auf 70 °C.

Man erhält quantitativ eine klare Lösung eines erfindungsgemässen Emulgators in überschüssigem Toluylendiisocyanat.

| | |
|---|---|
| NCO berechnet: | 45,69% |
| NCO gefunden | 45,67% |
| Viskosität: | ca. 20 mPas/20 °C |

Man erhält eine feinteilige, weisse Emulsion, wenn man entweder zu 30 Teilen des Produktes unter Rühren mit einem Pendraulikrührer (ca. 1000 Upm) 70 Teile destilliertes Wasser zufügt oder die Reihenfolge der Zugabe umkehrt und das Wasser vorlegt.

Beispiel 22

In 165 Teile Wasser werden 55 Teile Produkt gemäss Beispiel 3 mit einem Pendraulikrührer bei 1000 Upm innerhalb 30 Sekunden emulgiert.

Anschliessend werden 2900 g industriell hergestellte Nadelholzspäne mit einem Feuchtigkeitsgehalt von 6% in einer Laborbeleimungsmaschine mittels Zweistoffwirbelstromdüsen mit der Emulsion besprüht und hieraus ein Formling auf einem Stahlzulageblech, das vorher mit einer wässrigen Kaliumacetat/Diäthylenglykol-Lösung behandelt wurde, gebildet und die Oberfläche des Formlings ebenso mit der Trennmittellösung benetzt. Nach einer Presszeit von 3,2 Minuten bei einer Heizplattentemperatur von 170 °C und einem Pressdruck von 25 bar, der nach 1/3 der Presszeit auf 5 bar reduziert wird, erhält man eine Spanplatte mit einer Querzugfestigkeit von 0,74 MPa.

Beispiel 23

2000 g industriell hergestellte Mittelschichtspäne mit einem Feuchtigkeitsgehalt von 6% werden mit 114 g einer Emulsion vermischt, die, aus 76 g Wasser und 38 g Produkt aus Beispiel 6 bestehend, mittels eines Rührwerksmischkopfes unmittelbar vor der Beleimung hergestellt wird. Daneben werden 1000 g Deckschichtspäne mit einem Feuchtigkeitsgehalt von 8% mit 204 g einer 50%igen wässrigen Harnstoff-Formaldehydharzlösung (Äquivalentverhältnis 1:1,3) besprüht.

Aus Deck- und Mittelschichtspänen wird auf einem Aluminium-Zulageblech ein dreischichtiger Formling gebildet und in einer Laborpresse, wie in Beispiel 22 angegeben, zu einer Spanplatte verpresst, die eine Querzugfestigkeit von 0,75 MPa aufweist.

Beispiel 24

In einem 500-ml-Becherglas wird eine Emulsion aus 143 g Wasser, 17 g Kaliumbifluorid (®Basilit SP der Fa. Desowag-Bayer-Holzschutz GmbH), 29 g 50%ige Paraffindispersion (®Mobilcar 161 der Firma Mobil Oil AG) und 143 Produkt gemäss Beispiel 11 durch Rühren von Hand mit einem Holzrührstab hergestellt und damit 2950 g einer industriell hergestellten Spänemischung aus 50% Nadelholz und 50% Laubholz wie in Beispiel 22 angegeben benetzt. Hieraus wird zwischen zwei 1,5 mm starken Fichtenfurnieren als Deckschichten ein Formling gebildet, der wie unter Beispiel 22 erklärt, zur Aushärtung gebracht wird. Man erhält eine dekorative, pilzgeschützte Spanplatte hoher Biegefestigkeit in Faserrichtung der Furniere, die eine V 20-Querzugfestigkeit von 1,05 MPa und eine V 100-Querzugfestigkeit von 0,24 MPa aufweist.

Vergleichsbeispiele 1–3

Je 50 g der Vergleichsverbindungen X, Y und Z wurden mit je 950 g des Ausgangspolyisocyanats II 3 Stunden lang bei 60 °C umgesetzt. Man erhielt klare, braune Lösungen mit einem Emulgatorgehalt von 5%.

| Lösung | Monoalkohol | % NCO | (cP) |
|---|---|---|---|
| 1 | X | 28,7 | 100 |
| 2 | Y | 28,4 | 130 |
| 3 | Z | 28,7 | 120 |

Anschliessend wurden je 30 g der Vergleichsprodukte 1–3 mit je 70 ml Wasser unter Rühren vermischt. In keinem Fall erhielt man eine weisse, stabile Emulsion. Das Material war hellbraun, sah aus wie «geronnen» und setzte sich unter Ausbildung einer zweiten, braunen Phase innerhalb von 2–5 Minuten ab. Die nicht erfindungsgemässen Vgl.-Produkte 1–3 sind daher unbrauchbar.

**Patentansprüche**

1. Emulgatoren der allgemeinen Formel

$$R-X-(CH_2-CH_2-O)_n-CO-NH-Y$$

in welcher

X für eine der zweiwertigen Gruppen –O–, $-\overset{R'}{N}-$, $-CH_2-O-$ oder –S– steht,

n eine Zahl zwischen 10 und 50 bedeutet,

R′ einen $C_1$–$C_3$-Alkylrest,

R einen aromatischen oder cycloaliphatischen Rest mit insgesamt 2–9 C-Atomen, welcher gegebenenfalls Sauerstoff oder Stickstoff als Heteroatom im Ring enthält, und

Y einen Rest darstellt, wie er durch Entfernung einer Isocyanatgruppe aus einem organischen Polyisocyanat entsteht.

2. Emulgatoren nach Anspruch 1, dadurch gekennzeichnet, dass Y den Rest darstellt, wie er durch Entfernung einer Isocyanatgruppe aus einem Polyphenyl-Polymethylen-Polyisocyanat entsteht,

3. Emulgatoren nach Anspruch 1, dadurch gekennzeichnet, dass Y den Rest darstellt, welcher durch Entfernung einer Isocyanatgruppe aus Toluylendiisocyanat entsteht.

4. Emulgatoren nach Ansprüchen 1 bis 3, dadurch gekennzeichnet, dass R–X– für einen der Reste

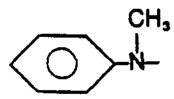
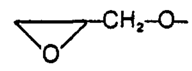
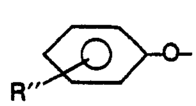
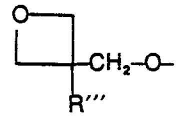
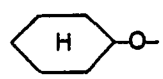
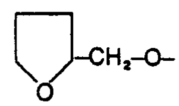
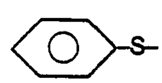
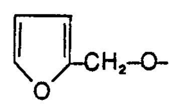

steht, wobei

R″ eine Methylgruppe, Halogen oder $-NO_2$ und

R‴ eine Methyl- oder Ethylgruppe bedeuten.

5. Emulsionen, enthaltend

1. 80–45 Gew.-%, bezogen auf gesamte Emulsion, an Wasser,

2. 20–50 Gew.-%, bezogen auf gesamte Emulsion, eines organischen Polyisocyanats und

3. 1–10 Gew.-%, bezogen auf Polyisocyanat, eines nichtionischen, oberflächenaktiven Mittels als Emulgator,

dadurch gekennzeichnet, dass der Emulgator eine Verbindung gemäss Ansprüchen 1 bis 4 ist.

6. Emulsion nach Ansprüchen 5, dadurch gekennzeichnet, dass Komponente (2) das Phosgenierungsprodukt der nicht destillierten Bodenfraktion ist, wie sie bei der Entfernung von 25–90 Gew.-% an 2,2′-, 2,4′ und/oder 4,4′-Diaminodiphenylmethan aus einem Anilin/Formaldehyd-Kondensat entsteht, oder die nichtdestillierte Bodenfraktion ist, wie sie bei der Entfernung von 25–90 Gew.-% an 2,2′-, 2,4′- und/oder 4,4′-Diisocyanatodiphenylmethan aus dem rohen Phosgenierungsprodukt eines Anilin/Formaldehyd-Kondensates erhalten wurde, wobei Komponente (2) 35 bis 70 Gew.-% an Diisocyanatodiphenylmethanen, davon 1 bis 8 Gew.-% 2,4′-Diisocyanatodiphenylmethan und 0–2 Gew.-% an 2,2′-Diisocyanatodiphenylmethan enthält, eine Viskosität bei 25 °C von 50 bis 600 mPas und einen NCO-Gehalt zwischen 28 und 32 Gew.-% aufweist.

7. Emulsion nach Anspruch 6, dadurch gekennzeichnet, dass Komponente (2) ein Polyisocyanat ist, welches durch Abdestillieren von 45 bis 90 Gew.-% 4,4'-Diphenylmethandiisocyanat aus einem rohen Diphenylmethandiisocyanat mit einem Gehalt von mehr als 85 Gew.-% an reinem Diphenylmethandiisocyanat als Bodenfraktion erhalten wurde oder welches durch Phosgenierung der nichtdestillierten Bodenfraktion hergestellt wurde, wie sie beim Abdestillieren von 45 bis 90 Gew.-% an 4,4'-Diaminodiphenylmethan aus rohem Diaminodiphenylmethan mit einem Gehalt von mehr als 85 Gew.-% an reinem Diaminodiphenylmethan entsteht.

8. Emulsion nach Anspruch 6, dadurch gekennzeichnet, dass Komponente (2) ein Polyisocyanat ist, welches durch Abdestillieren von 25 bis 80 Gew.-% an 2,4'- und gegebenenfalls 4,4'-Diisocyanatodiphenylmethan aus rohem Diphenylmethandiisocyanat mit einem Gehalt an Diisocyanatodiphenylmethanisomeren von 60 bis 90 Gew.-%, welches 20 bis 60 Gew.-% an 2,4'-Isomeren enthält, als Bodenfraktion erhalten wurde oder welches durch Phosgenierung der nichtdestillierten Bodenfraktion hergestellt wurde, wie sie beim Abdestillieren von 25 bis 80 Gew.-% an 2,4'- und gegebenenfalls 4,4'Diaminodiphenylmethan aus rohem Diaminodiphenylmethan mit einem Gehalt von 60 bis 90 Gew.-% an reinem Diaminodiphenylmethan entsteht, welches 20 bis 60 Gew.-% an 2,4'-Diaminodiphenylmethan enthält.

9. Verwendung von Emulsionen nach Ansprüchen 5–8 als Bindemittel bei der Herstellung von Formkörpern durch Heissverpressen einer Masse aus zerkleinerten organischen und/oder anorganischen Rohstoffen.

**Claims**

1. Emulsifiers of the general formula

$$R-X-(CH_2-CH_2-O)_n-CO-NH-Y$$

in which

X represents one of the divalent groups, $-O-$, $-\overset{R'}{\overset{|}{N}}-$, $-CH_2-O-$ or $-S-$,

n represents a number between 10 and 50,

R' represents a $C_1$–$C_3$ alkyl group,

R represents an aromatic or cycloaliphatic group having a total of 2 to 9 carbon-atoms, which may contain oxygen or nitrogen as hetero atom in the ring, and

Y represents a group such as is obtained by removal of an isocyanate group from an organic polyisocyanate.

2. Emulsifiers according to claim 1, characterised in that Y represents the group such as is obtained by removal of an isocyanate group from a polyphenyl-polymethylene polyisocyanate.

3. Emulsifiers according to claim 1, characterised in that Y represents the group obtained by removal of an isocyanate group from tolylene diisocyanate.

4. Emulsifiers according to claims 1 to 3, characterised in that R–X– represents one of the groups

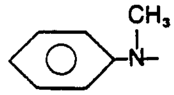
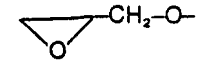
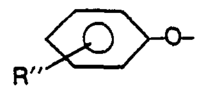
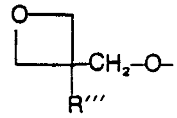
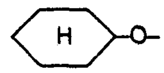
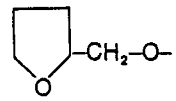
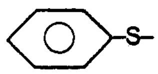
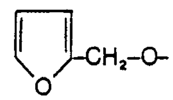

in which

R'' represents a methyl group, halogen or $-NO_2$ and

R''' represents a methyl or ethyl group.

5. Emulsions containing

1. SO to 45% by weight, based on the whole emulsion, of water,

2. 20 to 50% by weight, based on the whole emulsion, of an organic polyisocyanate and

3. 1 to 10% by weight, based on the polyisocyanate, of a non-ionic surface-active agent as emulsifier, characterised in that the emulsifier is a compound according to claims 1 to 4.

6. Emulsion according to claim 5, characterised in that component (2) is the phosgenation product of the undistilled bottom fraction such as is obtained by removal of 25 to90% by weight of 2,2'-, 2,4'- and/or 4,4'-diaminodiphenylmethane from an aniline/formaldehyde condensate or it is the undistilled bottom fraction as has been obtained by the romoval of 25 to 90% by weight of 2,2'-, 2,4'- and/or 4,4'-diisocyanatodiphenylmethane from the crude phosgenation product of an aniline/formaldehyde condensate, component (2) containing 35 to 70% by weight of diisocyanatodiphenylmethanes of which 1 to 8% by weight is 2,4'-diisocyanatodiphenylmethane and 0 to 2% by weight is 2,2'-diisocyanatodiphenylmethane, and having a viscosity at 25 °C of 50 to 600 mPas and an isocyanate content between 28 and 32% by weight.

7. Emulsion according to claim 6, characterised in that component (2) is a polyisocyanate which has been obtained as the bottom fraction by removal by distillation of 45 to 90% by weight of 4,4'-diphenylmethane diisocyanate from a crude diphenylmethane diisocyanate containing more than 85% by weight of pure diphenylmethane diisocyanate or which has been prepared by phosgenation of an undistilled bottom fraction such as is obtained by removal by distillation of 45 to 90% by weight of 4,4'-diaminodiphenylmethane from a crude diaminodiphenylmethane containing more than 85% by weight of pure diaminodiphenylmethane.

8. Emulsion according to claim 6, characterised in that component (2) is a polyisocyanate which has been obtained as bottom fraction by removal by distillation of 25 to 80% by weight of 2,4'- and

optionally 4,4′-diisocyanatodiphenylmethane from a crude diphenylmethane diisocyanate containing 60 to 90% by weight of diisocyanatodiphenylmethane isomers comprising 20 to 60% by weight of 2,4′-isomers, or which has been prepared by phosgenation of an undistilled bottom fraction such as is obtained by removal by distillation of 25 to 80% by weight of 2,4′- and optionally 4,4′-diaminodiphenylmethane from crude diaminodiphenylmethane containing 60 to 90% by weight of pure diaminodiphenylmethane comprising 20 to 60% by weight of 2,4′-diaminodiphenylmethane.

9. Use of emulsions according to claims 5–8 as binders in the production of moulded articles by hot moulding a mass of size reduced organic and/or inorganic raw materials.

**Revendications**

1. Agents émulsionnants de formule générale

$$R-X-(CH_2-CH_2-O)_n-CO-NH-Y$$

dans laquelle

X représente l'un des groupes divalents –O–,

R′
|
–N–, $-CH_2-O-$ ou –S–,

n est un nombre de 10 à 50,

R' est un groupe alkyle en $C_1$–$C_3$,

R représente un reste aromatique ou cycloaliphatique contenant au total de 2 à 9 atomes de carbone et qui contient le cas échéant de l'oxygène ou de l'azote en tant qu'hétéroatome dans le cycle, et

Y représente un reste tel qu'obtenu par élimination d'un groupe isocyanate d'un polyisocyanate organique.

2. Agents émulsionnants selon la revendication 1, caractérisés en ce que Y représente le reste tel qu'obtenu par élimination d'un groupe isocyanate d'un polyphényl-polyméthylène-polyisocyanate.

3. Agents émulsionnants selon la revendication 1, caractérisés en ce que Y représente le reste tel qu'obtenu par élimination d'un groupe isocyanate du toluylènediisocyanate.

4. Agents émulsionnants selon les revendications 1 à 3, caractérisés en ce que R–X– représente l'un des restes

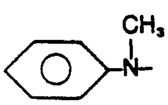
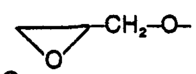
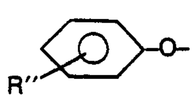
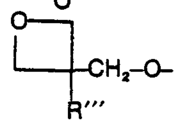
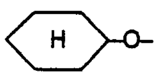
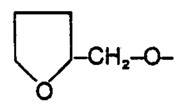
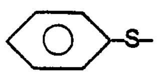
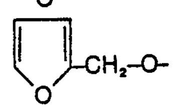

dans lesquelles

R″ représente un groupe méthyle, un halogène ou $-NO_2$ et

R‴ représente un groupe méthyle ou éthyle.

5. Emulsions, contenant

1. 80 à 45% en poids, par rapport à l'émulsion totale, d'eau,

2. 20 à 50% en poids, par rapport à l'émulsion totale, d'un polyisocyanate organique et

3. 1 à 10% en poids, par rapport au polyisocyanate, d'un agent tensioactif non ionique qui sert d'agent émulsionnant, caractérisées en ce que l'agent émulsionnant est un composé selon les revendications 1 à 4.

6. Emulsion selon la revendication 5, caractérisée en ce que le composant (2) est le produit de phosgénation de la fraction de pied non distillée telle qu'obtenue par élimination de 25 à 90% en poids de 2,2′-, 2,4′- et/ou 4,4′-diaminodiphénylméthane à partir d'un condensat anilineformaldéhyde, ou est la fraction de pied non distillée telle qu'obtenue par élimination de 25 à 90% en poids de 2,2′-, 2,4′-, et/ou 4,4′-diisocyanatodiphénylméthane à partir du produit de phosgénation brut d'un condensat anilineformaldéhyde, le composant (2) contenant 35 à 70% en poids de diisocyanatodiphénylméthanes dont 1 à 8% en poids de 2,4′-diisocyanatodiphénylméthane et 0 à 2% en poids de 2,2′-diisocyanatodiphénylméthane et présentant une viscosité à 25 °C de 50 à 600 mPas et une teneur en NCO de 28 à 32% en poids.

7. Emulsion selon la revendication 6, caractérisée en ce que le composant (2) est un polyisocyanate qui a été obtenu par distillation de 45 à 90% en poids de 4,4′-diphénylméthane-diisocyanate à partir d'un diphénylméthane-diisocyanate brut contenant plus de 85% en poids de diphénylméthane-diisocyanate pur, en tant que fraction de pied, ou qui a été préparé par phosgénation de la fraction de pied non distillée telle qu'obtenue par distillation de 45 à 90% en poids de 4,4′-diaminodiphénylméthane à partir d'un diaminodiphénylméthane brut contenant plus de 85% en poids de diaminodiphénylméthane pur.

8. Emulsion selon la revendication 6, caractérisée en ce que le composant (2) est un polyisocyanate qui a été obtenu en fraction de pied par distillation de 25 à 80% en poids de 2,4′- et, le cas échéant, de 4,4′-diisocyanatodiphénylméthane, à partir d'un diphénylméthane-diisocyanate brut contenant 60 à 90% en poids de diisocyanatodiphénylméthanes isomères et qui contient de 20 à 60% en poids de l'isomère 2,4′, ou qui a été préparé par phosgénation de la fraction de pied non distillée telle qu'obtenue en distillant 25 à 80% en poids de 2,4′- et, le cas échéant, de 4,4′-diaminodiphénylméthane, à partir d'un diaminodiphénylméthane brut contenant de 60 à 90% en poids de diaminodiphénylméthane pur, et qui contient de 20 à 60% en poids de 2,4′-diaminodiphénylméthane.

9. Utilisation des émulsions selon les revendications 5 à 8, en tant que liant dans la préparation d'objets moulés par compression à chaud d'une masse de matières premières organiques et/ou minérales en particules.